# FASCICULE DE BREVET EUROPEEN

(11) **EP 1 990 375 B1**
(45) Date de publication et mention de la délivrance du brevet: **21.07.2010**
(21) Numéro de dépôt: 07290597.9
(22) Date de dépôt: 11.05.2007
(51) Int. Cl.: C09C 1/02, C09C 1/30, C09C 1/36, C09C 3/04, B01F 17/52, B01F 17/42, B01F 17/00

(54) **Utilisation d'une émulsion inverse d'un polymère de l'acrylamide avec un monomère acrylique comme agent stabilisant et réducteur de mousse, dans un procédé de broyage en milieu aqueux de matières minérales et de liants.**
Use of a reverse emulsion of an acrylamide polymer with an acrylic monomer as a stabilising agent and foam reducer, in a method for the grinding of mineral materials and binders in an aqueous medium.
Use of a reverse emulsion of an acrylamide polymer with an acrylic monomer as a stabilising agent and foam reducer, in a method for the grinding of mineral materials and binders in an aqueous medium.

(43) Date de publication de la demande: 12.11.2008
(73) Titulaire: COATEX S.A.S., 69730 Genay (FR)
(72) Inventeur: Mongoin, Jacques, 69650 Quincieux (FR); Jacquemet, Christian, 69005 Lyon (FR); Suau, Jean-Marc, 69480 Lucenay (FR)
(74) Mandataire: Richebourg, Michel François

(56) Documents cités:
- WO-A-93/11183
- WO-A-2005/111153
- WO-A-2006/008657
- WO-A-2006/016036
- CA-A1- 2 081 831
- FR-A1- 2 810 261
- GB-A- 841 127
- US-A- 6 136 305

## Description

Les particules minérales et les liants polymères sont 2 composants essentiels qui entrent dans la fabrication de nombreux matériaux, tels que par exemple les plastiques. Les particules minérales, tel que le carbonate de calcium, apportent notamment des propriétés mécaniques et optiques au niveau de la pièce finale ; quant aux liants, en général sous forme d'émulsions stabilisées par des tensio-actifs, ils confèrent la cohésion nécessaire à l'ensemble des constituants du matériau final.

Depuis une dizaine d'années, on a développé le concept de particules qui, sous la forme d'un produit unique, apportent à la fois les propriétés de la matière minérale et du liant : on parle à ce titre de "particules pigmentaires auto-liantes". De tels produits sont obtenus par broyage en milieu aqueux de la matière minérale en présence du liant polymérique. Ce procédé conduit à des particules constituées à la fois du liant et de la matière inorganique de départ : le liant et la matière minérale se retrouvent intimement liés au sein de ces particules pigmentaires auto-liantes.

La cohésion de telles particules est notamment améliorée par rapport à la cohésion d'un simple mélange entre la matière inorganique et le liant, comme illustré dans le document WO 2006 / 008657 qui sera discuté plus en détails dans la suite de la présente Demande. Le terme liant utilisé dans la présente Demande fait référence à tout produit naturel ou synthétique de nature organique, possédant des propriétés liantes. Ces propriétés liantes, qui augmentent les forces de cohésion interparticulaires du minéral de départ, sont déterminées selon la méthode décrite dans l'exemple 1 du document WO 2006 / 008657.

Aussi, les procédés concernés par la présente Demande sont-ils des procédés mettant en oeuvre au moins une étape de broyage en milieu aqueux d'au moins une matière minérale et d'au moins un liant polymérique. Des étapes éventuelles de dispersion, de concentration et de séchage peuvent intervenir par la suite.

Ce type de procédé pose 2 problèmes majeurs à l'homme du métier. Le premier d'entre eux est lié au phénomène général de sédimentation des particules pigmentaires auto-liantes, qui sont en suspension dans l'eau. L'homme du métier recherche alors à améliorer la stabilité des suspensions aqueuses de ces particules, de manière à pouvoir stocker ou transporter ces suspensions, éventuellement sur de longues périodes : il cherche à réduire le phénomène de sédimentation.

Deuxièmement, dans la mesure où des liants polymériques sont présents pendant l'étape de broyage en milieu aqueux, et comme ces liants se présentent sous la forme d'émulsions stabilisées par des tensio-actifs, lesdits tensio-actifs se retrouvent soumis à de fortes contraintes mécaniques pendant l'opération de broyage : on observe la formation de mousse. Cette mousse présente l'inconvénient d'altérer au final certaines propriétés (notamment optiques) des compositions fabriquées à partir des suspensions aqueuses de particules pigmentaires auto-liantes. De plus, la formation de mousse engendre des contraintes industrielles, notamment au niveau du transfert des suspensions de ces particules vers les cuves de stockage.

L'art antérieur relatif aux procédés de fabrication de particules pigmentaires auto-liantes en suspension aqueuse va désormais être discuté, de manière à dégager les solutions proposées à l'homme du métier pour résoudre ce double problème de mousse et de sédimentation des suspensions obtenues.

Le document WO 2005 / 111153 décrit un procédé de fabrication de particules en suspension aqueuse par broyage de charges inorganiques avec des liants polymériques et ce, en présence d'agents dispersants tels que des polyacrylates. Les particules ainsi obtenues peuvent alors être mises en oeuvre dans la fabrication de peintures et de sauces de couchage. Ce document ne renseigne toutefois aucunement l'homme du métier quant aux éventuelles solutions apportées aux problèmes de sédimentation et de mousse pour les suspensions aqueuses obtenues, dans la mesure où il ne fait même pas état de ces 2 inconvénients.

Le document WO 93 / 11183 décrit un procédé de fabrication d'une suspension aqueuse de particules constituées d'un matériau inorganique et d'un liant polymérique, par mélange mais aussi broyage (page 33, lignes 33-34) en milieu aqueux. La caractéristique de ce procédé réside dans la régulation du potentiel Zêta de la suspension initiale de matériau inorganique, notamment au moyen d'un dispersant permettant d'ajuster le potentiel de surface de la charge minérale à une valeur comprise entre 0 et - 50 mV. On obtient ainsi une dispersion stable de particules pigmentaires auto-liantes qui peuvent entrer dans la composition de différents revêtements comme des peintures.

D'une part, ce document souligne la possibilité de mettre en oeuvre dans le procédé qu'il décrit des épaississants, notamment cellulosiques ou acryliques en émulsion directe (et éventuellement acryliques associatifs). L'homme du métier sait parfaitement que le rôle joué par ces épaississants est de limiter le phénomène de sédimentation des particules, notamment par augmentation de la viscosité du milieu. Ces solutions à base d'épaississants cellulosiques ou acryliques en émulsion directe sont bien connues de l'homme du métier, au sens où elles ont été initialement développées pour stabiliser des suspensions aqueuses de matières minérales "classiques" (c'est-à-dire exemptes de liants polymériques et non obtenues par le procédé selon la présente invention). Le document CA 2 081 831 publié en 1993 décrivait déjà la mise en oeuvre de tels produits pour stabiliser une suspension aqueuse de carbonate de calcium, et notamment l'utilisation de dérivés de la cellulose (comme la carboxyméthyl cellulose), d'épaississants acryliques (qui peuvent être associatifs) et même de la gomme xanthane.

Quant au problème de mousse, la solution proposée dans les exemples de ce document consiste en la mise en oeuvre d'agents antimousse, tel que le Nopco^{™} NXZ commercialisé par la société COGNIS^{™} et le Defoamer^{™} 643 autrefois commercialisé par la société RHONE POULENC^{™}, ces 2 produits étant constitués d'huiles de coupes pétrolières. De tels produits sont largement utilisés dans des procédés de fabrication de suspensions aqueuses de matières minérales "classiques" (selon l'expression précédemment employée), au même titre que des produits sililés ou des silicones. A cet égard, le document JP 53 053598 de 1978 décrivait déjà la mise en oeuvre de silicones pour réduire la présence de mousse dans une suspension aqueuse de carbonate de calcium.

A la différence des 2 documents précédents qui mettent en oeuvre un agent dispersant avant et / ou pendant l'étape de broyage, le document WO 2006 / 016036 décrit un procédé de fabrication d'une suspension de matières minérales dans l'eau, par broyage en présence de liants pour peintures, puis introduction d'un agent dispersant. Ce document avance pour les suspensions obtenues des valeurs stables pour la viscosité Brookfield^{™} à 100 tours / minute et ce, pendant 8 jours. D'une part, il ne met pas en oeuvre de test qui permette de quantifier directement le phénomène de sédimentation des particules en suspension aqueuse. D'autre part, il n'indique aucun caractère de stabilité sur des périodes supérieures à 8 jours, et notamment sur des périodes de l'ordre de 1 mois qui sont celles visées dans la présente Demande en terme d'effet anti-sédimentation. Enfin, il ne renseigne pas l'homme du métier quant à une solution éventuelle pour palier à la formation de la mousse.

Parallèlement, le document WO 2006 / 008657 décrit un procédé de préparation de particules pigmentaires auto-liantes par broyage dans l'eau d'une matière inorganique et d'un liant pour papier, un agent dispersant étant ensuite introduit dans la suspension résultante. Les exemples 4 et 5 révèlent la mise en oeuvre conjointe d'un agent dispersant et d'un agent de mouillage, tous deux en émulsion directe, en vue d'obtenir la stabilisation de la viscosité Brookfield^{™} à 100 tours / minute sur une durée de 14 jours : rien n'est avancé en terme d'effet anti-sédimentation, et aucune mesure n'a été faite sur des périodes de l'ordre de 1 mois. Enfin, ce document ne contient aucun enseignement sur la manière de traiter les problèmes de mousse lorsqu'on réalise l'opération de broyage de la matière inorganique et des liants en milieu aqueux.

Aussi, en vue de résoudre le double problème de la formation de mousse et de sédimentation dans des suspensions aqueuses de particules pigmentaires auto-liantes, obtenues par broyage en milieu aqueux d'au moins une matière minérale et d'au moins un liant, l'état de la technique enseigne à l'homme du métier de mettre en oeuvre 2 solutions distinctes qui consistent respectivement en :
- l'utilisation d'agents antimousse bien connus qui sont des huiles de coupes pétrolières, des produits sililés et des silicones,
- et la mise en oeuvre d'épaississants cellulosiques ou acryliques (éventuellement associatifs) en émulsion directe ou de gomme xanthane,
ces 2 solutions étant notamment déjà connues et décrites dans des procédés de fabrication de suspensions aqueuses de matières minérales, par broyage et / ou dispersion (mais sans liant polymère).

Or, poursuivant ses recherches dans ce domaine, la Demanderesse a mis au point l'utilisation d'un agent anti-sédimentation et réducteur de mousse, dans un procédé comprenant une étape de broyage en milieu aqueux d'au moins une matière minérale et d'au moins un liant, caractérisée en ce que ledit agent anti-sédimentation et réducteur de mousse est une émulsion inverse formée d'une dispersion dans une phase huileuse de particules d'eau et d'un polymère de l'acrylamide avec un monomère acrylique.

De manière avantageuse, la présence de mousse et le phénomène de sédimentation sur une période au moins égale à un mois sont largement réduits par rapport à la même suspension ne contenant pas ladite émulsion inverse. De manière tout à fait avantageuse, et à partir d'un produit unique qui est l'émulsion inverse précédemment décrite, on obtient des résultats au moins équivalents en terme d'effets antimousse et antisédimentation à ceux obtenus avec les solutions de l'art antérieur qui consistent en la combinaison de 2 produits (1 agent antimousse et 1 agent antisédimentation) : ceci représente à la fois un progrès technique et une grande simplification pour l'utilisateur final qui ne doit plus manipuler qu'un seul produit.

Comme indiqué auparavant, l'état de la technique relatif aux procédés de broyage en milieu aqueux d'au moins une matière minérale et d'au moins un liant ne divulguait ni ne suggérait une telle solution consistant en un produit unique : au contraire, pour palier aux problèmes de mousse et de sédimentation dans les suspensions de particules pigmentaires auto-liantes obtenues, il enseignait la mise en oeuvre conjointe d'un épaississant cellulosique ou acrylique (éventuellement associatif) ou de la gomme xanthane, et d'un agent antimousse sous la forme d'un mélange d'huiles à base de coupes pétrolières, d'un produit sililé ou à base de silicones.

La Demanderesse reconnaît que les émulsions inverses particulières dont l'utilisation est revendiquée dans la présente Demande sont déjà connues en tant que telles et ce, depuis de nombreuses années : ainsi, le document GB 841 127 publié en 1960 décrivait-il déjà un procédé de polymérisation en émulsion inverse de l'acide acrylique et de l'acrylamide. De telles émulsions ont peu à peu trouvé des applications, notamment comme agents épaississants, dans des domaines techniques éloignés de celui visé par la présente Demande tels que la cosmétique, la pharmacologie ou encore la détergence. Ainsi, le document US 6 136 305 décrit-il une émulsion inverse d'un copolymère de l'acrylamide, de l'acide acrylique et d'un autre monomère polyfonctionnel, mis en oeuvre comme épaississant dans des applications cosmétiques.

Aussi, la Demanderesse a su identifier, dans des domaines techniques très éloignés de celui de la présente invention, la solution lui permettant de résoudre le problème technique qui lui était posé. Sans vouloir être liée à une quelconque théorie, la Demanderesse pense que la mise en oeuvre des émulsions inverses selon l'invention permet de réduire fortement la présence de mousse à partir des huiles qui composent la phase continue de ladite émulsion inverse, tout en résolvant le problème de sédimentation au moyen du polymère de l'acrylamide avec un monomère acrylique qui, avec l'eau, constitue la phase dispersée de ladite émulsion inverse.

L'objet de l'invention consiste donc en l'utilisation, comme agent stabilisant et réducteur de mousse, dans un procédé comprenant au moins une étape de broyage en milieu aqueux d'au moins une matière minérale et d'au moins un liant polymère, caractérisée en ce que ledit agent stabilisant et réducteur de mousse est une émulsion inverse formée d'une dispersion dans une phase huileuse de particules d'eau et d'au moins un polymère de l'acrylamide avec un monomère acrylique.

Cette utilisation est aussi caractérisée en ce que ladite émulsion inverse contient, par rapport à son poids total (la somme des pourcentages étant égale à 100 %) :
- de 10 à 70 % en poids d'eau,
- de 10 à 60 % en poids d'huile,
- de 10 à 40 % en poids d'au moins un polymère de l'acrylamide avec un monomère acrylique,
- de 1 à 5 % en poids de tensio-actifs.

Cette utilisation est aussi caractérisée en ce que le polymère de l'acrylamide avec un monomère acrylique est éventuellement totalement ou partiellement neutralisé par un ou plusieurs agents de neutralisation, choisis préférentiellement parmi l'ammoniaque, les hydroxydes de sodium, de potassium et leurs mélanges, l'agent de neutralisation étant très préférentiellement l'ammoniaque.

Cette utilisation est aussi caractérisée en ce que le polymère de l'acrylamide avec un monomère acrylique possède un poids moléculaire compris entre 10⁵ et 10⁷ g/mole.

Cette utilisation est aussi caractérisée en ce que le ratio en poids acrylamide : monomère acrylique est compris entre 10 : 90 et 90 : 10, préférentiellement entre 20 : 80 et 80 : 20.

Cette utilisation est aussi caractérisée en ce que le monomère acrylique est choisi parmi l'acide acrylique, l'acide méthacrylique et leurs mélanges, et est préférentiellement l'acide acrylique.

Cette utilisation est aussi caractérisée en ce que la phase huileuse est composé d'huiles qui sont des mélanges aromatiques et / ou d'alcanes ayant de 6 à 20 atomes de carbone, préférentiellement de 12 à 18 atomes de carbone.

Cette utilisation est aussi caractérisée en ce que ledit procédé met en oeuvre de 300 à 3 000 ppm de ladite émulsion inverse, par rapport au poids sec de matière minérale et de liant polymérique.

Cette utilisation est aussi caractérisée en ce que ledit procédé met en oeuvre une quantité en poids sec de liant polymérique inférieure à 20 %, préférentiellement à 10 %, très préférentiellement à 5 % du poids sec de matière minérale.

Cette utilisation est aussi caractérisée en ce que la matière minérale est choisie parmi les oxydes métalliques, les hydroxydes, les' sulfites, les silicates, les carbonates, les dolomies, le kaolin, le talc, le gypse, le dioxyde de titane, le blanc satin, le trihydroxyde d'aluminium et leurs mélanges.

Cette utilisation est aussi caractérisée en ce que les carbonates sont choisis parmi le carbonate de calcium synthétique, naturel et leurs mélanges, et en ce qu'il s'agit préférentiellement d'un carbonate de calcium naturel, choisi préférentiellement parmi la craie, le marbre, la calcite, le calcaire et leurs mélanges.

Cette utilisation est aussi caractérisée en ce que le liant est choisi parmi les liants semi-cristallins, les liants à base d'alcool polyvinylique, de l'acétate de polyvinyle, de l'amidon, de la caséine, des protéines, de la carboxyméthylcellulose (CMC), de l'éthylhydroxyéthylcellulose (EHEC), des copolymères d'esters acryliques, et de leurs mélanges.

Cette utilisation est aussi caractérisée en ce que les liants semi-cristallins sont choisis parmi des polyéthylènes ou des copolymères sous forme neutralisée du polyéthylène avec d'autres unités monomères tels que l'acide acrylique ou d'autres monomères ou leurs mélanges.

Cette utilisation est aussi caractérisée en ce que le liant est sous forme de granulés secs, ou sous forme d'une ou plusieurs solutions ou d'une ou plusieurs suspensions ou d'une ou plusieurs émulsions aqueuses.

Cette utilisation est aussi caractérisée en ce que, lorsque le liant est sous forme d'une émulsion, il s'agit d'une émulsion de cires de polyéthylène ou des copolymères sous forme neutralisée du polyéthylène avec d'autres unités monomères tels que l'acide acrylique ou d'autres monomères, des émulsions latex de copolymères d'esters acryliques, ou leurs mélanges.

Cette utilisation est enfin caractérisée en ce qu'on met aussi en oeuvre un agent dispersant avant et / ou pendant et / ou après l'étape de broyage.

### EXEMPLES

### Exemple 1

Cet exemple illustre l'utilisation, dans un procédé de fabrication d'une suspension aqueuse de particules pigmentaires auto-liantes à base de carbonate de calcium et d'un liant styrène-butadiène

### Procédé de fabrication des particules pigmentaires auto-liantes

Dans un premier temps, on commence par préparer une dispersion aqueuse concentrée de particules pigmentaires auto-liantes, selon le mode opératoire suivant.

Dans un broyeur de type Dyno-Mill^{™} avec un cylindre fixe, un impulseur tournant et dont le corps broyant est constitué de billes de verre d'un diamètre compris entre 1 et 1,4 mm, on broie, en milieu aqueux :
- du carbonate de calcium qui est un marbre de Norvège, dont le diamètre médian (mesuré par un Sedigraph^{™} 5100 commercialisé par la société MICROMERITICS^{™}) est égal à 0,8 µm,
- un liant styrène-acrylique commercialisé par la société BASF^{™} sous le nom de Acronal^{™} S728,
- un autre liant qui est un copolymère de l'éthylène et de l'acide acrylique et commercialisé par la société BASF^{™} sous le nom de Polygen^{™} WE4.

Les quantités d'eau, de carbonate de calcium et des 2 liants sont ajustées de telle manière à ce que :
- la teneur en poids sec de carbonate de calcium et des 2 liants soit égale à 20 % du poids total de la suspension obtenue après le broyage,
- le rapport en poids sec carbonate de calcium / Acronal^{™} S728 / Polygen^{™} WE4 soit égal à 100 / 9,5 / 0,5.

La densité du corps broyant est égale à 1,8 g/cm³.

La chambre de broyage présente un volume égal à 600 cm³.

La vitesse circonférentielle du broyeur est égale à 10m.s⁻¹.

Après broyage, on obtient donc une suspension aqueuse de particules pigmentaires auto-liantes dont le diamètre médian (mesuré par un Sedigraph^{™} 5100 commercialisé par la société MICROMERITICS^{™}) est égal à 0,5 µm.

Cette suspension est ensuite concentrée à une teneur en poids sec de carbonate de calcium et des 2 liants égale à 40 % de son poids total, au moyen d'une centrifugeuse de type Rouan XYX tournant à 5500 tours par minute.

La suspension obtenue est enfin dispersée, avec introduction de 0,5 % en poids sec d'un polymère de l'acide acrylique, de l'acide méthacrylique, du styrène et de l'acrylate de butyle et de 0,1 % en poids sec d'un polymère de l'acide acrylique et de l'anhydride maléique (ces quantités étant relatives au poids sec de carbonate de calcium et des 2 liants).

A l'exception de l'essai n° 1 qui est un témoin, on ajoute ensuite pour chacun des essais n° 2 à 15 un produit selon l'invention ou un produit selon l'art antérieur ou le mélange de 2 produits de l'art antérieur. Les produits sont repérés par des lettres dont la signification est donnée ci-dessous. Les essais n° 2 à 9 mettent en oeuvre 1000 ppm d'un antimousse ou d'un agent antisédimentation de l'art antérieur. Les essais n° 10 à 14 mettent en oeuvre 1000 ppm d'un antimousse et 1000 ppm d'un agent antisédimentation de l'art antérieur. L'essai n° 15 met en oeuvre 2000 ppm de l'émulsion inverse selon l'invention.

On appelle :
- agent antisédimentation 1 de l'art antérieur, un épaississant qui est un polymère acrylique associatif de type HASE, commercialisé par la société COATEX^{™} sous le nom Thixol^{™} 53 L, noté A1;
- agent antisédimentation 2 de l'art antérieur, un épaississant qui est un polymère acrylique associatif de type HASE, commercialisé par la société ROHM & HAAS^{™} sous le nom Acrysol^{™} TT 945, noté A2 ;
- agent antisédimentation 3 de l'art antérieur, un épaississant qui est un polymère acrylique associatif de type ASE, commercialisé par la société COATEX^{™} sous le nom Viscoatex^{™} 46, noté A3 ;
- agent antisédimentation 4 de l'art antérieur, une hydroxyéthyl cellulose, commercialisée par la société AKZO NOBEL^{™} sous le nom Bermocoll^{™} EM 700 FQ, noté A4 ;
- agent antisédimentation 5 de l'art antérieur, une gomme xanthane, commercialisée par la société RHODIA^{™} sous le nom Rhodigel^{™}, noté A5
- agent antimousse 1 de l'art antérieur, une formulation d'huiles minérales, commercialisée par la société NOPCO^{™} sous le nom NOPCO^{™} NXZ, noté B1;
- agent antimousse 2 de l'art antérieur une émulsion aqueuse directe de polydiméthyl siloxanes, commercialisée par la société RHODIA^{™} sous le nom Rhodosil^{™} 422, noté B2;
- agent antimousse 3 de l'art antérieur, une émulsion de silicones et d'hydrophobes, commercialisée par la société BYK^{™} sous le nom Byk^{™} 022, noté B 3 ;
- agent antimousse et antisédimentation selon l'invention une émulsion inverse qui consiste en la dispersion dans une phase huileuse d'eau et d'un polymère de l'acrylamide avec l'acide acrylique, commercialisé par la société COATEX^{™} sous le nom M1201, et notée C.

### Mesure de l'effet antisédimentation

Pour chacune des suspensions aqueuses de particules pigmentaires auto-liantes obtenues selon les essais n° 1 à 15, on prélève 1 litre de suspension immédiatement après la fabrication de celle-ci, et on l'introduit dans un bécher en verre de 5 litres.

Aux instants t=14 jours et t=28 jours, on détermine par mesure :
- la hauteur du surnageant qui est constitué d'eau,
- la hauteur du sédiment qui est constitué majoritairement de particules pigmentaires auto-liantes.

Ces 2 hauteurs sont exprimées en pourcentage de la hauteur total de la suspension aqueuse dans le bécher, et notées s₁₄ et d₁₄ respectivement pour le surnageant et le sédiment au bout de 14 jours, et s₂₈ et d₂₈ respectivement pour le surnageant et le sédiment au bout de 28 jours. Plus ces pourcentages sont élevés, plus le phénomène de sédimentation est important.

Les résultats sont indiqués dans le tableau 1.

### Mesure de l'effet antimousse

Pour chacune des suspensions aqueuses de particules pigmentaires auto-liantes obtenues selon les essais n° 1 à 15, on prélève 700 ml qui sont agités pendant 30 secondes dans un agitateur type Hamilton Beach^{™} sur position High.
Après 30 secondes de repos, la densité expérimentale p du système est déterminée par pycnométrie. L'erreur relative est de l'ordre de 5 % sur la mesure finale.
La densité des 2 liants est égale à 1,0 et celle du carbonate de calcium étant égale à 2,7. On rappelle que la teneur en poids sec de carbonate de calcium et des 2 liants est égale à 40 % du poids total de la suspension, et que le rapport en poids sec carbonate de calcium / Acronal^{™} S728 / Polygen^{™} WE4 est égal à 100 / 9,5 / 0,5
On en déduit que la densité théorique de la dispersion concentrée de particules pigmentaires auto-liantes (sans mousse) est égale à 1,299.
Plus on trouve une densité expérimentale faible, plus la présence de mousse est importante. Les résultats sont indiqués dans le tableau 1.

Le tableau 1 permet de constater tout d'abord que les agents antisédimentation de l'art antérieur permettent effectivement d'améliorer la stabilité des suspensions obtenues, mais qu'ils n'ont aucun effet antimousse ; parallèlement, les agents antimousse de l'art antérieur permettent de réduire la présence de mousse dans les suspensions, mais n'ont aucun effet sur le phénomène de sédimentation (cas des essais n° 2 à 9).
Lorsqu'on met en oeuvre un mélange constitué de 2000 ppm de ces produits (1000 ppm d'antimousse et 1000 ppm d'agent antisédimentation), la quantité de mousse diminue et la stabilité des suspensions est améliorée : cette solution représente les combinaisons de l'art antérieur (cas des essais n° 10 à 14).
Si on met enfin en oeuvre 2000 ppm de l'émulsion inverse selon l'invention (essai n° 15), on réduit dans les mêmes proportions que les combinaisons de l'art antérieur (essais n° 10 à 14) la quantité de mousse et le phénomène de sédimentation des particules en suspension.
Ces résultats démontrent donc bien que seul l'essai correspondant à l'invention permet, à travers un produit unique utilisé en même quantité que les 2 produits de l'art antérieur, de minimiser la quantité de mousse et le phénomène de sédimentation, à un niveau de performances au moins égal à celui atteint par les solutions de l'art antérieur.

**Tableau 1**

| Essai n° | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Témoin (T) Art Antérieur (AA) Invention (IN) | T | AA | AA | AA | AA | AA | AA | AA | AA | AA | AA | AA | AA | AA | IN |
| | - | A1 | A2 | A3 | A4 | A5 | B1 | B2 | B3 | A1B1 | A2B2 | A3B3 | A4B1 | A5B1 | C |
| ρ (g/cm³) | 1,087 | 1,088 | 1,089 | 1,087 | 1,087 | 1,090 | 1,195 | 1,190 | 1,187 | 1,193 | 1,188 | 1,191 | 1,194 | 1,192 | 1,192 |
| s₁₄ (%) | 18 | 4 | 5 | 4 | 5 | 6 | 18 | 18 | 18 | 4 | 5 | 3 | 4 | 6 | 3 |
| s₂₈ (%) | 25 | 6 | 6 | 6 | 7 | 9 | 25 | 25 | 25 | 6 | 7 | 6 | 7 | 9 | 6 |
| d₁₄ (%) | 5 | 0 | 1 | 0 | 1 | 2 | 5 | 5 | 5 | 0 | 1 | 1 | 1 | 2 | 0 |
| d₂₈ (%) | 12 | 1 | 2 | 2 | 2 | 3 | 12 | 12 | 12 | 1 | 2 | 2 | 3 | 3 | 1 |

## Revendications

1. Utilisation, comme agent stabilisant et réducteur de mousse, dans un procédé comprenant au moins une étape de broyage en milieu aqueux d'au moins une matière minérale et d'au moins un liant polymère, **caractérisée en ce que** ledit agent stabilisant et réducteur de mousse est une émulsion inverse formée d'une dispersion dans une phase huileuse de particules d'eau et d'au moins un polymère de l'acrylamide avec un monomère acrylique.

2. Utilisation selon la revendication 1, **caractérisée en ce que** ladite émulsion inverse contient, par rapport à son poids total (la somme des pourcentages étant égale à 100 %)
- de 10 à 70 % en poids d'eau,
- de 10 à 60 % en poids d'huile,
- de 10 à 40 % en poids d'au moins un polymère de l'acrylamide avec un monomère acrylique,
- de 1 à 5 % en poids de tensio-actifs.

3. Utilisation selon l'une des revendications 1 ou 2, **caractérisée en ce que** le polymère de l'acrylamide avec un monomère acrylique est éventuellement totalement ou partiellement neutralisé par un ou plusieurs agents de neutralisation, choisis préférentiellement parmi l'ammoniaque, les hydroxydes de sodium, de potassium et leurs mélanges, l'agent de neutralisation étant très préférentiellement l'ammoniaque.

4. Utilisation selon l'une des revendications 1 à 3, **caractérisée en ce que** le polymère de l'acrylamide avec un monomère acrylique possède un poids moléculaire compris entre 10⁵ et 10⁷ g/mole.

5. Utilisation selon l'une des revendications 1 à 4, **caractérisée en ce que** le ratio en poids acrylamide : monomère acrylique est compris entre 10 : 90 et 90: 10, préférentiellement entre 20 : 80 et 80 : 20.

6. Utilisation selon l'une des revendications 1 à 5, **caractérisée en ce que** le monomère acrylique est choisi parmi l'acide acrylique, l'acide méthacrylique et leurs mélanges, et est préférentiellement l'acide acrylique.

7. Utilisation selon l'une des revendications 1 à 6, **caractérisée en ce que** la phase huileuse est composé d'huiles qui sont des mélanges aromatiques et / ou d'alcanes ayant de 6 à 20 atomes de carbone, préférentiellement de 12 à 18 atomes de carbone.

8. Utilisation selon l'une des revendications 1 à 7, **caractérisée en ce que** ledit procédé met en oeuvre de 300 à 3 000 ppm de l'émulsion inverse, par rapport au poids sec de matière minérale et de liant polymérique.

9. Utilisation selon l'une des revendications 1 à 8, **caractérisée en ce que** ledit procédé met en oeuvre une quantité en poids sec de liant polymérique inférieure à 20 %, préférentiellement à 10 %, très préférentiellement à 5 % du poids sec de matière minérale.

10. Utilisation selon l'une des revendications 1 à 9, **caractérisée en ce que** la matière minérale est choisie parmi les oxydes métalliques, les hydroxydes, les sulfites, les silicates, les carbonates, les dolomies, le kaolin, le talc, le gypse, le dioxyde de titane, le blanc satin, le trihydroxyde d'aluminium et leurs mélanges.

11. Utilisation selon la revendication 10, **caractérisée en ce que** les carbonates sont choisis parmi le carbonate de calcium synthétique, naturel et leurs mélanges, et **en ce qu'**il s'agit préférentiellement d'un carbonate de calcium naturel, choisi préférentiellement parmi la craie, le marbre, la calcite, le calcaire et leurs mélanges.

12. Utilisation selon l'une des revendications 1 à 11, **caractérisée en ce que** le liant est choisi parmi les liants semi-cristallins, les liants à base d'alcool polyvinylique, de l'acétate de polyvinyle, de l'amidon, de la caséine, des protéines, de la carboxyméthylcellulose (CMC), de l'éthylhydroxyéthylcellulose (EHEC), des copolymères d'esters acryliques, et de leurs mélanges.

13. Utilisation selon la revendication 12, **caractérisée en ce que** les liants semi-cristallins sont choisis parmi des polyéthylènes ou des copolymères sous forme neutralisée du polyéthylène avec d'autres unités monomères tels que l'acide acrylique ou d'autres monomères ou leurs mélanges.

14. Utilisation selon l'une des revendications 1 à 13, **caractérisée en ce que** le liant est sous forme de granulés secs, ou sous forme d'une ou plusieurs solutions ou d'une ou plusieurs suspensions ou d'une ou plusieurs émulsions aqueuses.

15. Utilisation selon la revendication 14, **caractérisée en ce que**, lorsque le liant est sous forme d'une émulsion, il s'agit d'une émulsion de cires de polyéthylène ou des copolymères sous forme neutralisée du polyéthylène avec d'autres unités monomères tels que l'acide acrylique ou d'autres monomères, des émulsions latex de copolymères d'esters acryliques, ou leurs mélanges.

16. Utilisation selon l'une des revendications 1 à 15, **caractérisée en ce qu'**on met aussi en oeuvre un agent dispersant avant et / ou pendant et / ou après l'étape de broyage.

## Claims

1. Use, as a stabilizing and foam-reducing agent, in a method comprising at least one step of grinding in an aqueous medium, of at least one mineral material and at least one polymer binder, **characterized in that** said stabilizing and foam-reducing agent is an inverse emulsion formed of a dispersion of water particles and at least one polymer of acrylamide with an acrylic monomer in an oil phase.

2. Use according to claim 1, **characterized in that** said inverse emulsion contains, in relation to its total weight (the sum of the percentages being equal to 100%):
- 10 to 70% water by weight,
- 10 to 60% oil by weight,
- 10 to 40% of at least one polymer of acrylamide with an acrylic monomer by weight,
- 1 to 5% surface active agents by weight.

3. Use according to one of the claims 1 or 2, **characterized in that** the polymer of acrylamide with an acrylic monomer is potentially fully or partially neutralized by one or more neutralization agents, preferentially chosen from among ammonium hydroxide, sodium hydroxides, potassium and mixtures thereof, the neutralization agent preferentially being ammonium hydroxide.

4. Use according to one of the claims 1 to 3, **characterized in that** the polymer of acrylamide with an acrylic monomer has a molecular weight between 10⁵ and 10⁷ g/mole.

5. Use according to one of the claims 1 to 4, **characterized in that** the ratio of acrylamide to acrylic monomer by weight is between 10: 90 and 90: 10, and preferentially between 20: 80 and 80: 20.

6. Use according to one of the claims 1 to 5, **characterized in that** the acrylic monomer is chosen from among acrylic acid, methacrylic acid and mixtures thereof, and is preferentially acrylic acid.

7. Use according to one of the claims 1 to 6, **characterized in that** the oil phase is composed of oils which are aromatic mixtures and/or alkanes having 6 to 20 carbon atoms, and preferentially 12 to 18 carbon atoms.

8. Use according to one of the claims 1 to 7, **characterized in that** said method implements 300 to 3,000 ppm of the inverse emulsion, in relation to the solids content of mineral material and polymer binder.

9. Use according to one of the claims 1 to 8, **characterized in that** said method implements a quantity of polymer binder by weight less than 20%, preferentially less than 10%, and very preferentially less than 5% of the solids content of mineral material.

10. Use according to one of the claims 1 to 9, **characterized in that** the mineral material is chosen from among metallic oxides, hydroxides, sulfites, silicates, carbonates, dolomites, kaolin, talc, gypsum, titanium dioxide, white satin, aluminium trihydroxide, and mixtures thereof.

11. Use according to claim 10, **characterized in that** the carbonates are chosen from among synthetic and natural calcium carbonate and mixtures thereof, and **in that** it is preferentially a natural calcium carbonate, preferentially chosen from among chalk, marble, calcite, limestone, and mixtures thereof.

12. Use according to one of the claims 1 to 11, **characterized in that** the binder is chosen from among semi-crystalline binders, polyvinylic alcohol-based binders, polyvinyl acetate, starch, casein, proteins, carboxymethylcellulose (CMC), ethylhydroxyethylcellulose (EHEC), copolymers of acrylic esters, and mixtures thereof.

13. Use according to claim 12, **characterized in that** the semi-crystalline binders are chosen from among polyethylenes or copolymers in a neutralized form of polyethylene with other monomer units such as acrylic acid or other monomers, or mixtures thereof.

14. Use according to one of the claims 1 to 13, **characterized in that** the binder is in the form of dry granulates, or in the form of one or more solutions or one or more suspensions or one or more aqueous emulsions.

15. Use according to claim 14, **characterized in that**, when the binder is in the form of an emulsion, it is an emulsion of polyethylene waxes or neutralized-form copolymers of polyethylene with other monomer units such as acrylic acid or other monomers, latex emulsions of copolymers of acrylic esters, or mixtures thereof.

16. Use according to one of the claims 1 to 15, **characterized in that** a dispersing agent is also implemented before and/or during and/or after the step of grinding.

## Patentansprüche

1. Verwendung, als Stabilisierungs- und Schaumreduzierungsmittel, in einem Verfahren, welches mindestens einen Schritt des Mahlens mindestens eines Mineralstoffes und mindestens eines polymeren Bindemittels in einem wässrigen Medium umfasst, **dadurch gekennzeichnet, dass** das besagte Stabilisierungs- und Schaumreduzierungsmittel eine aus einer Dispersion in einer Wasserteilchen-Ölphase und mindestens einem Acrylamid-Polymer mit einem acrylischen Monomer gebildete umgekehrte Emulsion ist.

2. Verwendung nach Anspruch 1, **dadurch gekennzeichnet, dass** die besagte umgekehrte Emulsion im Verhältnis zu ihrem Gesamtgewicht enthält:
- von 10 bis 70 Gewichtsprozent Wasser,
- von 10 bis 60 Gewichtsprozent Öl,
- von 10 bis 40 Gewichtsprozent mindestens eines Acrylamid-Polymers mit einem acrylischen Monomer,
- von 1 bis 5 Gewichtsprozent Tenside
enthält, wobei die Summe der Prozentanteil 100 % ergibt.

3. Verwendung nach einem der Ansprüche 1 oder 2, **dadurch gekennzeichnet, dass** das Acrylamid-Polymer mit einem acrylischen Monomer gegebenenfalls ganz oder teilweise durch ein oder mehrere Neutralisationsmittel, welche vorzugsweise unter Ammoniak, Natriumhydroxiden, Kalium oder einem Gemisch daraus gewählt werden, neutralisiert wird, wobei das Neutralisationsmittel bevorzugterweise Ammoniak ist.

4. Verwendung nach einem der Ansprüche 1 bis 3, **dadurch gekennzeichnet, dass** das Acrylamid-Polymer mit einem acrylischen Monomer ein Molekulargewicht zwischen 10⁵ und 10⁷ g/mol aufweist.

5. Verwendung nach einem der Ansprüche 1 bis 4, **dadurch gekennzeichnet, dass** das Gewichtsverhältnis von Acrylamid zu Acrylmonomer zwischen 10:90 und 90:10, vorzugsweise zwischen 20:80 und 80:20 beträgt.

6. Verwendung nach einem der Ansprüche 1 bis 5, **dadurch gekennzeichnet, dass** das acrylische Monomer unter Acrylsäure, Methacrylsäure und Gemischen daraus gewählt wird und vorzugsweise Acrylsäure ist.

7. Verwendung nach einem der Ansprüche 1 bis 6, **dadurch gekennzeichnet, dass** die Ölphase aus Ölen besteht, welche aromatische Gemische und / oder Gemische von Alkanen mit 6 bis 20 Kohlenstoffatomen, vorzugsweise mit 12 bis 18 Kohlenstoffatomen, sind.

8. Verwendung nach einem der Ansprüche 1 bis 7, **dadurch gekennzeichnet, dass** in dem besagten Verfahren zwischen 300 bis 3 000 ppm der umgekehrten Emulsion, im Verhältnis zum Trockengewicht des Mineralstoffes und des polymeren Bindemittels, eingesetzt werden.

9. Verwendung nach einem der Ansprüche 1 bis 8, **dadurch gekennzeichnet, dass** in dem besagten Verfahren eine Trockengewichtmenge eines polymeren Bindemittels eingesetzt wird, welche unter 20 %, vorzugsweise unter 10 %, bevorzugterweise unter 5 % des Trockengewichts des Mineralstoffs liegt.

10. Verwendung nach einem der Ansprüche 1 bis 9, **dadurch gekennzeichnet, dass** der Mineralstoff unter Metalloxyden, Hydroxiden, Sulfiten, Silicaten, Carbonaten, Dolomiten, Kaolin, Talk, Gips, Titandioxid, einer weißglänzenden Lösung, Aluminiumtrihydroxid und Gemischen daraus gewählt wird.

11. Verwendung nach Anspruch 10, **dadurch gekennzeichnet, dass** die Carbonate unter synthetischem oder natürlichem Calciumcarbonat und Gemischen daraus gewählt werden, und dass es sich vorzugsweise um ein natürliches Calciumcarbonat, vorzugsweise unter Kreide, Marmor, Kalkspat, Kalkstein und Gemischen daraus gewählt, handelt.

12. Verwendung, nach einem der Ansprüche 1 bis 11, **dadurch gekennzeichnet, dass** das Bindemittel unter halbkristallinen Bindemitteln, Bindemitteln auf Polyvinylalkoholbasis, Polyvinylacetat, Stärke, Casein, Proteinen, Carboxymethylcellulose (CMC), Ethylhydroxyethylcellulose (EHEC), Acrylester-Copolymeren, und Gemischen daraus, gewählt wird.

13. Verwendung nach Anspruch 12, **dadurch gekennzeichnet, dass** die halbkristallinen Bindemittel unter Polyethylen oder Copolymeren in neutralisierter Form des Polyethylens mit weiteren Monomer-Einheiten wie beispielsweise Acrylsäure oder sonstige Monomere und Gemischen daraus gewählt werden.

14. Verwendung nach einem der Ansprüche 1 bis 13, **dadurch gekennzeichnet, dass** das Bindemittel in der Form von Trockengranulat, in der Form einer oder mehrerer Lösung(en) oder einer oder mehrerer Suspension(en) oder einer oder mehrerer wässrigen Emulsion(en) vorliegt.

15. Verwendung nach Anspruch 14, **dadurch gekennzeichnet, dass** es sich, wenn das Bindemittel in der Form einer Emulsion vorliegt, um eine Polyethylenwachsemulsion oder Copolymere in neutralisierter Form des Polyethylens mit weiteren Monomer-Einheiten wie beispielsweise Acrylsäure oder sonstige Monomere, Acrylestercopolymer-Latexemulsionen, oder Gemische daraus, handelt.

16. Verwendung nach einem der Ansprüche 1 bis 15, **dadurch gekennzeichnet, dass** man vor und/oder während und/oder nach dem Schritt des Mahlens ebenfalls ein Dispergiermittel einsetzt.
